# EUROPEAN PATENT SPECIFICATION

(11) **EP 2 565 117 B1**
(45) Date of publication and mention of the grant of the patent: **11.12.2013**
(21) Application number: 11179218.0
(22) Date of filing: 29.08.2011
(51) Int. Cl.: B64C 1/06

(54) **A stiffening element for an aircraft**
Versteifungselement für ein Flugzeug
Élément de raidissement pour avion

(43) Date of publication of application: 06.03.2013
(73) Proprietor: Airbus Operations (S.A.S.), 31060 Toulouse (FR)
(72) Inventor: Bernadet, Philippe, 31770 COLOMIERS (FR); Marin, Yannick, 31520 RAMONVILLE (FR)
(74) Representative: Gicquel, Olivier Yves Gérard

(56) References cited:
- EP-A2- 1 149 687
- US-A1- 2008 128 550

## Description

The present invention relates to a stiffening element for an aircraft and in particular to an aircraft stringer.

For further stiffening of a fuselage skin of an aircraft, it is known to connect to the fuselage skin a plurality of longitudinal stiffening elements. The longitudinal stiffening elements, which as a rule are so-called stringers, extend so as to be parallel to a longitudinal axis of the fuselage of the aircraft and are arranged on the inside, circumferentially on the fuselage skin, so as to be evenly spaced apart from each other. The longitudinal stiffening elements or stringers can comprise a Z-shaped, an L-shaped, an Omega-shaped or some other cross-sectional shape.

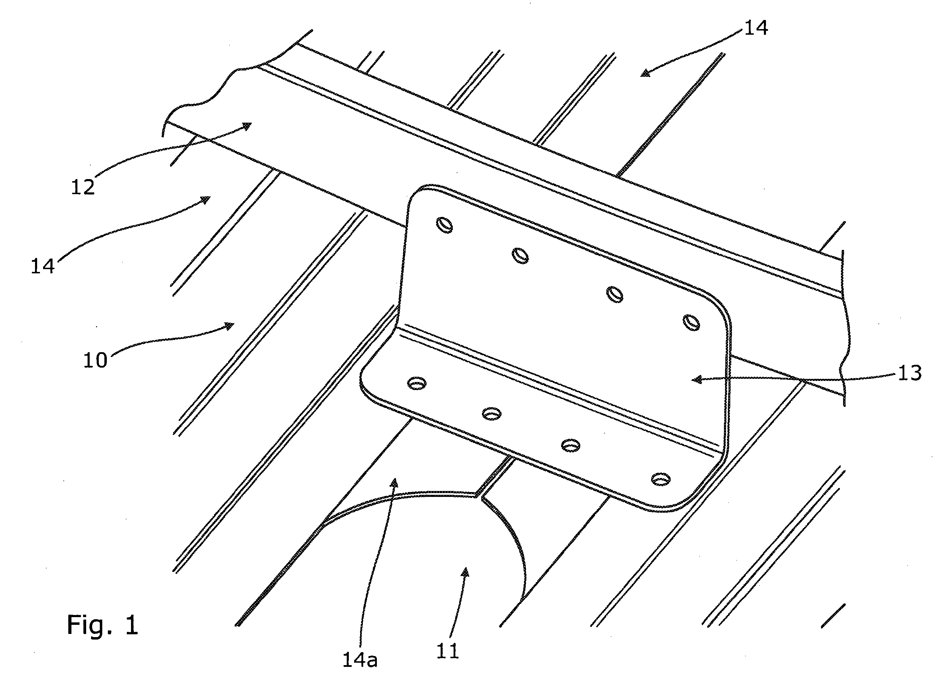

Figure 1 depicts a portion of an aircraft fuselage having a plurality of stringers 10 attached to a fuselage skin 11. The stringers 10 are also connected to an aircraft frame member 12 by means of L-shaped brackets 13. The stringer 10, for example, depicted in FIG. 1 is an Omega-shaped stringer having a central U-shaped body extended by two side flanges 14. Each flange 14 has a protrusion part 14a also called a "duck-foot" located in the same plane as the flange 14 so as to be attached to the bracket 13. Each bracket 13 is attached to aircraft stringers 10 and the frame member 12 by drilling holes in the bracket 13. One disadvantage of using brackets to attach stringers onto the frame members is that it adds additional manufacturing steps during aircraft assembly as well as weight to the aircraft when all stringers to frame members are aggregated across the entire aircraft.

The patent EP1149687 describes a method for attaching stringers onto the frame members without brackets.

It is an object of this invention to provide an improved aircraft stringer which overcomes or alleviates the above problems.

According to the first aspect of the invention there is provided an aircraft stringer comprising an elongated body portion, and at least one foot portion, characterised in that at least one of the foot portions comprises an integrated fitting member comprising a support flange for attachment in use with a frame member of the aircraft.

The stringer may be made as a single part of a composite material such as a fibre reinforced thermoplastic material, a thermosetting material, or a metallic material.

The stringer may have two flanges as a foot portion in which at least one flange is provided with the integrated fitting member. The support flange may be located in a plan perpendicular to the plane in which the foot portion is located.

According to a second aspect of the invention there is provided an aircraft arrangement comprising a fuselage skin, a plurality of aircraft stringers in accordance with the first aspect of the present invention which are attached to the fuselage skin and a frame member located transversally along the fuselage skin, wherein the support flange of the integrated fitting member of each aircraft stringer is attached to the frame member.

The invention will now be described by way of example with reference to the accompanying drawings, of which:-
Figure 1 is a perspective view of a portion of an aircraft fuselage with conventional aircraft stringers and brackets;
Figure 2 is a similar view as Figure 1 in which the stringers and brackets have been replaced by a stringer according to the present invention;
Figure 3 is a perspective view of a stringer according to an alternative of the present invention; and
Figure 4 is a similar view as Figure 3 according to another alternative of the present invention.

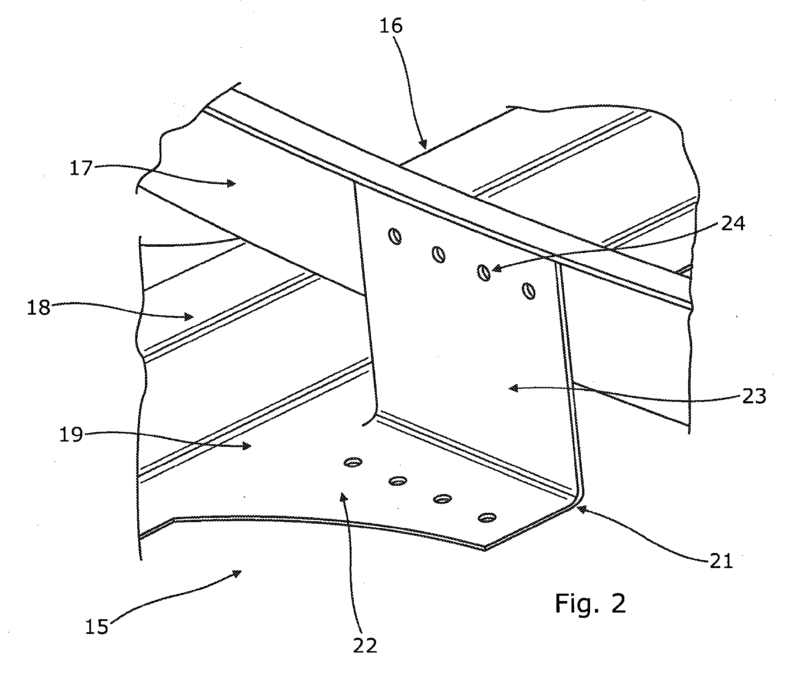

Referring to Figure 2, there is shown an arrangement of a portion of a skin **15** of an aircraft fuselage comprising a plurality of stiffening elements **16**, or stringers (only one shown in the Figure 2), according to the present invention, attached to the skin **15** and a frame member **17** located transversally along the fuselage.

The stringers **16** are formed as a single part using a suitable composite material such as a fibre reinforced thermoplastic material. In this example, each stiffening element **16** has a cross section having an omega shape defining an elongated body portion **18** and a foot portion. The foot portion comprises a first flange **19** and a second flange **20** spaced apart from each other in their plane of attachment to the skin **15.** The first flange **19** has an integrated fitting member **21** comprising a laterally extended portion of the flange **19** also called skin flange **22** and a support flange **23.**

The support flange **23** is a rearwards continuation of the skin flange **22** which is bent up by 90°. A plurality of attachment holes **24** is made both in the support flange **23** and in the skin flange **22.** The attachment holes **24** are to mechanically attach the stringer **16** to the frame member **17** and the fuselage skin **15.**

This stiffening element **16** with at least an integrated fitting member **21** allows for the reduction of installation time during aircraft assembly. When aggregated together over the whole aircraft, there is a weight saving compared to using conventional composite stringers and separate brackets.

Although the invention has been described by way of example with reference to a specific embodiment of the invention various modifications or additions may be made, , provided they fall under the scope of protection of the invention, solely defined by the appended claims.

For example, the stiffening element **16** can be bonded to the skin **15** or the fuselage frames **17** thereby rendering the structure weakening attachment holes **24** in the skin flange **22** unnecessary.

Alternatively, it will be appreciated that each stiffening element **16** can have a different shape and be made of a different material. Furthermore each stiffening element **16** can have more than one fitting member **21,** for instance at least one on each flange **19, 20.**

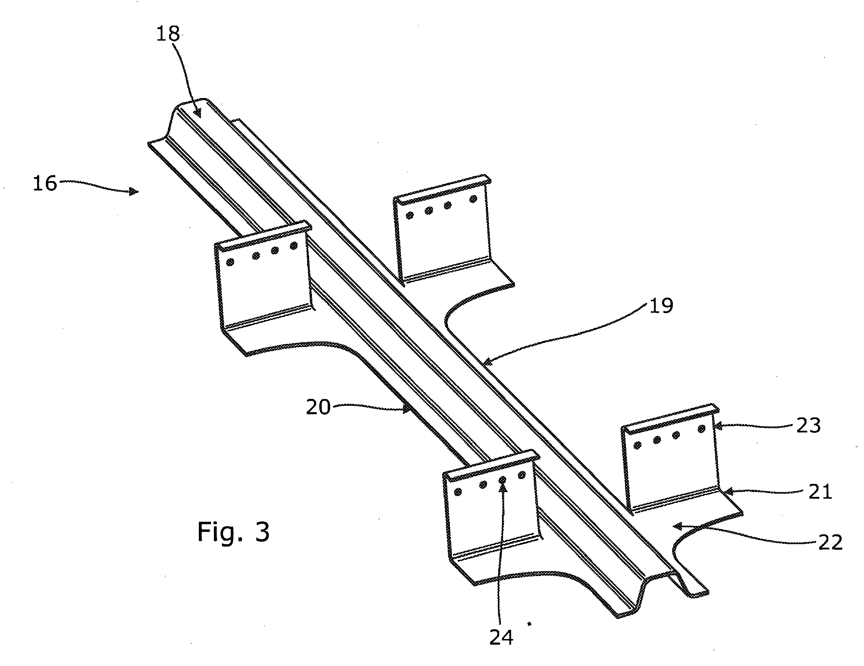

In another alternative, as shown in Figure 3, the free end of the support flange **23** is bent up toward the skin flange **22** at an angle of 90° thus increasing the stiffness of the support flange.

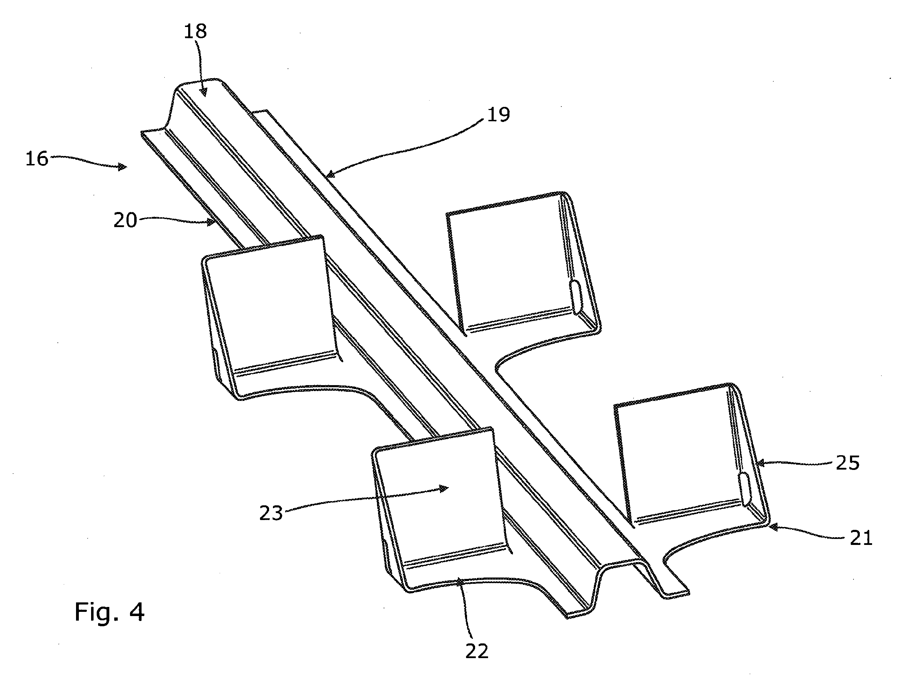

In another alternative shown in Figure 4, the fitting member **21** further comprises a stabiliser **25.** The stabiliser **25** is a webbed section between the edges of the support flange **23** and the skin flange **22.**

## Claims

1. An airccaft stringer (16) comprising an elongated body portion (18), and at least one foot portion, **characterized in that** at least one of said foot portions comprises an integrated fitting member (21), the integrated fitting member (21) comprising a support flange (23) for attachment to an aircraft frame member (17).

2. The aircraft stringer (16) as claimed in claim 1, **characterized in that** the stringer (16) has two flanges (19,20) as a foot portion in which at least one flange is provided with said integrated fitting member (21) that comprises a support flange (23) for attachment to an aircraft frame member (17).

3. The aircraft stringer (16) as claimed in any of the preceding claims, **characterized in that** the support flange (23) is located in a plane perpendicular to the plane in which the foot portion is located.

4. The aircraft stringer (16) as claimed in any of the preceding claims, **characterized in that** the support flange (23) is connected to the foot portion by means of a skin flange (22) in which the skin flange (22) is an extended portion of the foot portion.

5. The aircraft stringer (16) as claimed in any of the preceding claims, **characterized in that** the support flange (23) is provided with a plurality of attachment holes (24).

6. The aircraft stringer (16) as claimed in any of the preceding claims, **characterized in that** the support flange (23) comprises a free end which is bended up at an angle of 90° with respect to the plane in which the support flange (23) is located.

7. The aircraft stringer (16) as claimed in any of the preceding claims, **characterized in that** the fitting member (21) comprises a stabiliser (25).

8. The aircraft stringer (16) as claimed in claim 7 when based on claim 4, **characterized in that** the stabiliser (25) comprises a webbed section between the edges of the support flange (23) and the skin flange (22).

9. The aircraft stringer (16) as claimed in any of the preceding claims, **characterized in that** the elongated body portion (18) has an omega cross-section.

10. The aircraft stringer (16) as claimed in any of the preceding claims, **characterized in that** the aircraft stringer (16) is made as a single part of a material selected from the following; a fibre reinforced thermoplastic material, a thermosetting material or a metallic material.

11. An aircraft arrangement comprising a fuselage skin (15), a plurality of aircraft stringers (16) as claimed in any one of claims 1 to 10 which are attached to the fuselage skin (15) and a frame member (17) located transversally along the fuselage skin (15), **characterized in that** the support flange (23) of the integrated fitting member (21) of each aircraft stringer (16) is attached to the frame member (17).

12. An aircraft arrangement as claimed in claim 11, **characterized in that** the support flange (23) of each aircraft stringer (16) is co-bonded or attached by means of a fastening device to the frame member (17).

## Patentansprüche

1. Flugzeug-Stringer (16), umfassend einen länglichen Körperabschnitt (18) und mindestens einen Fußabschnitt, **dadurch gekennzeichnet, dass** mindestens einer der Fußabschnitte ein integriertes Rippenfußelement (21) umfasst, wobei das integrierte Rippenfußelement (21) einen Stützflansch (23) zur Befestigung an einem Flugzeugrahmenelement (17) umfasst.

2. Flugzeug-Stringer (16) nach Anspruch 1, **dadurch gekennzeichnet, dass** der Stringer (16) zwei Flansche (19, 20) als einen Fußabschnitt aufweist, in dem mindestens ein Flansch mit dem integrierten Rippenfußelement (21) bereitgestellt ist, das einen Stützflansch (23) zur Befestigung an einem Flugzeugrahmenelement (17) umfasst.

3. Flugzeug-Stringer (16) nach einem der vorherigen Ansprüche, **dadurch gekennzeichnet, dass** der Stützflansch (23) in einer Ebene angeordnet ist, die senkrecht zu der Ebene verläuft, in welcher der Fußabschnitt angeordnet ist.

4. Flugzeug-Stringer (16) nach einem der vorherigen Ansprüche, **dadurch gekennzeichnet, dass** der Stützflansch (23) mit dem Fußabschnitt über einen Membranflansch (22) verbunden ist, wobei der Membranflansch (22) ein erweiterter Abschnitt des Fußabschnitts ist.

5. Flugzeug-Stringer (16) nach einem der vorherigen Ansprüche, **dadurch gekennzeichnet, dass** der Stützflansch (23) mit mehreren Befestigungslöchern (24) bereitgestellt ist.

6. Flugzeug-Stringer (16) nach einem der vorherigen Ansprüche, **dadurch gekennzeichnet, dass** der Stützflansch (23) ein freies Ende umfasst, das in einem Winkel von 90° in Bezug auf die Ebene hochgebogen ist, in welcher der Stützflansch (23) angeordnet ist.

7. Flugzeug-Stringer (16) nach einem der vorherigen Ansprüche, **dadurch gekennzeichnet, dass** das Rippenfußelement (21) einen Stabilisator (25) umfasst.

8. Flugzeug-Stringer (16) nach Anspruch 7 auf Grundlage von Anspruch 4, **dadurch gekennzeichnet, dass** der Stabilisator (25) einen Bahnabschnitt zwischen den Kanten des Stützflansches (23) und dem Membranflansch (22) umfasst.

9. Flugzeug-Stringer (16) nach einem der vorherigen Ansprüche, **dadurch gekennzeichnet, dass** der längliche Körperabschnitt (18) einen Omega-Querschnitt aufweist.

10. Flugzeug-Stringer (16) nach einem der vorherigen Ansprüche, **dadurch gekennzeichnet, dass** die Flugzeug-Stringer (16) aus einem einzelnen Teil eines Materials gefertigt sind, das aus Folgendem ausgewählt ist: einem faserverstärkten thermoplastischen Material, einem duroplastischen Material oder einem metallischen Material.

11. Flugzeug-Anordnung, umfassend einen Rumpfüberzug (15), mehrere Flugzeug-Stringer (16) nach einem der Ansprüche 1 bis 10, die an dem Rumpfüberzug (15) angebracht sind, und ein Rahmenelement (17), das quer entlang des Rumpfüberzugs (15) angeordnet ist, **dadurch gekennzeichnet, dass** der Stützflansch (23) des integrierten Rippenfußelements (21) jedes Flugzeug-Stringers (16) an dem Rahmenelement befestigt ist.

12. Flugzeuganordnung nach Anspruch 11, **dadurch gekennzeichnet, dass** der Stützflansch (23) jedes Flugzeug-Stringers (16) co-gebondet oder mittels einer Befestigungsvorrichtung an dem Rahmenelement (17) befestigt ist.

## Revendications

1. Raidisseur d'aéronef (16) comprenant une portion de corps allongée (18) et au moins une portion d'embase, **caractérisé en ce qu'**au moins l'une desdites portions d'embase comprend un organe d'ajustement intégré (21), l'organe d'ajustement intégré (21) comprenant une bride de support (23) destinée à être attachée à un organe de châssis de l'aéronef (17).

2. Raidisseur d'aéronef (16) selon la revendication 1, **caractérisé en ce que** le raidisseur (16) présente deux brides (19, 20) en tant que portion d'embase, au moins une bride étant pourvue dudit organe d'ajustement intégré (21) qui comprend une bride de support (23) destinée à être attachée à un organe de châssis de l'aéronef (17).

3. Raidisseur d'aéronef (16) selon l'une quelconque des revendications précédentes, **caractérisé en ce que** la bride de support (23) est située dans un plan perpendiculaire au plan dans lequel est située la portion d'embase.

4. Raidisseur d'aéronef (16) selon l'une quelconque des revendications précédentes, **caractérisé en ce que** la bride de support (23) est connectée à la portion d'embase au moyen d'une bride de peau (22), la bride de peau (22) étant une portion prolongée de la portion d'embase.

5. Raidisseur d'aéronef (16) selon l'une quelconque des revendications précédentes, **caractérisé en ce que** la bride de support (23) est pourvue d'une pluralité de trous de fixation (24).

6. Raidisseur d'aéronef (16) selon l'une quelconque des revendications précédentes, **caractérisé en ce que** la bride de support (23) comprend une extrémité libre qui est recourbée suivant un angle de 90° par rapport au plan dans lequel est située la bride de support (23).

7. Raidisseur d'aéronef (16) selon l'une quelconque des revendications précédentes, **caractérisé en ce que** l'organe d' ajustement (21) comprend un stabilisateur (25).

8. Raidisseur d'aéronef (16) selon la revendication 7, lorsqu'elle dépend de la revendication 4, **caractérisé en ce que** le stabilisateur (25) comprend une section nervurée entre les bords de la bride de support (23) et de la bride de peau (22) .

9. Raidisseur d'aéronef (16) selon l'une quelconque des revendications précédentes, **caractérisé en ce que** la portion de corps allongée (18) a une section transversale en forme d'oméga.

10. Raidisseur d'aéronef (16) selon l'une quelconque des revendications précédentes, **caractérisé en ce que** le raidisseur d'aéronef (16) est fabriqué sous forme d'une pièce de matériau unique choisie parmi : un matériau thermoplastique renforcé par des fibres, un matériau thermodurcissable ou un matériau métallique.

11. Ensemble d'aéronef comprenant une peau de fuselage (15), une pluralité de raidisseurs d'aéronef (16) selon l'une quelconque des revendications 1 à 10 qui sont attachés à la peau de fuselage (15) et un organe de châssis (17) situé transversalement le long de la peau de fuselage (15), **caractérisé en ce que** la bride de support (23) de l'organe d'ajustement intégré (21) de chaque raidisseur d'aéronef (16) est attachée à l'organe de châssis (17) .

12. Ensemble d'aéronef selon la revendication 11, **caractérisé en ce que** la bride de support (23) de chaque raidisseur d'aéronef (16) est liée ou fixée au moyen d'un dispositif d'attache à l'organe de châssis (17).
